# EUROPEAN PATENT APPLICATION

(11) **EP 3 879 482 A1**
(43) Date of publication of application: **15.09.2021**
(21) Application number: 20020114.3
(22) Date of filing: 09.03.2020
(51) Int. Cl.: G06Q 50/22, G06Q 10/10

(54) **SYSTEM AND METHODS FOR SUCCESS BASED HEALTH CARE PAYMENT**

(71) Applicant: Lyfegen HealthTech AG, 4051 Basel (CH)
(72) Inventor: Rebolledo, Leon, 4056 Basel (CH)
(74) Representative: Pietruk, Claus Peter

(57) **Abstract**

An automated data processing method is suggested comprising the computerized steps of training a machine-learning model based on a first training set of data, evaluating new data with the trained model and identifying outliers, adding selected outliers to a training set and training the machine learning model with a second training set comprising the selected outliers. It is also suggested to implement a automated health care contract data processing method based on this method.

## Description

The present invention relates in particular to the use of block chain technology in the healthcare environment.

It is well known that costs of the healthcare system continually increase. Where new and innovative treatments are to be made available to patients, the cost frequently is very significant. Those that have to pay for costs tend to be willing to pay only in case the treatment is effective. While a success-based payment basically is acceptable to hospitals, pharmaceutical companies and the like, a clear understanding should be provided as to what an effective treatment is and whether the high costs of new treatments are justified by the success of the treatment in view of a specific patient's health or not. Then, obviously, where the treatment is less successful, this may in some cases be due to the behavior of the patient rather than an ineffectiveness of treatment. Thus, where a success-based payment is to be effected, agreements need to be met and both sides, payer as well as provider of treatment, need to trust in the regulations and process of determining the fair payment.

In this context, it should be noted that the determination of what can be seen as a successful treatment often requires obtaining highly sensitive patient data. It is in the interest of all parties involved to keep such sensitive information confidential. In addition, it must be ensured that the data is not tampered with. One of the techniques that recently evolved for communicating such data is the block chain technology that by using distributed ledgers ensure that data cannot be tempered with. Block chain technology has already been used in a medical context.

From EP 3 327 727 A2, a data processing system and method implementing an analytics platform and network information systems are known. According to EP 3 327 727 A2 it is suggested inter alia that a healthcare resource plan is optimized based on a given time period, the risk level, the cost, the detection of patients at risk and so forth. It is stated that the platform suggested empowers healthcare providers, pharmaceutical firms and financial services firms with insight how to manage provider networks as to the cost of care. The clinical informatics platform is suggested to combine analytics systems for example disease specific analytic tools, predictive models and modules. It is suggested to extract the data, normalize the data, provide a robust clinical and networking analytics and deliver powerful and timely insights. It is stated that healthcare providers may be enabled to compare, analyze and identify best practices. It is stated that the data ingestion techniques may be applied to a heterogeneous system. Also, it is stated that the system suggested may comprise tools for analytic model building, where inputs to the model in terms of rules, attributes, characteristics, criteria or the like may comprise diagnosis codes, test results, outpatient prescriptions and so forth.

From US 10,340,038 B2, a healthcare transactional validation file block chain is known. It is mentioned that enforcing privacy standards compliance, interoperability, data format conversion, ensuring proper treatment applied to the patient and maintaining a continuity of treatment records for individuals are issues in healthcare systems that manage large volumes of electronic medical records. It is suggested that healthcare transactions associated with the stakeholder are compiled into the chain of healthcare transaction blocks and that when the transaction is conducted, the corresponding healthcare parameters such as inputs and outputs, clinical evidence, outcomes etc. are sent to validation devices that establish the validity of the transaction and generate a new block in the block chain. It is also suggested that validation devices receive healthcare tokens that represent healthcare actions taken with respect to the stakeholder including for example test results for patient and diagnosis; the validation device shall also obtain an identifier of the respective historical block chain representing a chronicle of health care activities for the patient, doctor, insurance company etc. Example healthcare tokens could include test results, a genetic sequence, a diagnosis, a prognosis, a patient identifier, a caregiver identifier and so forth. It is stated to be preferred that the various service, systems, databases or interfaces exchange data are using standardized protocols or algorithms such as HTTP, HTTPS, AES, public-private key exchanges, web service APIs, known financial transaction protocols and that exchanges are conducted over for example the Internet, WAN, VPN or other type of packet switched network. It is also suggested that services performed by a doctor for a patient are packaged in the form of the healthcare transaction, which is then analyzed by peers in the ecosystem with respect to the validity of the services. Furthermore, it is also suggested that each entity can have its own block chain rather than the complete echo system having a single chain covering all transactions as in the case with crypto currencies.

The cited document suggests that a common nomenclature ensures that transactions are processed in a uniform, repeatable and verifiable manner. The document inter alia suggests that the peer obtains healthcare tokens and attempts to generate a validity block incorporating a validity token that could include simple information such as "agree/ disagree" or more complex information such as recommendations or alternatives diagnosis.

It is also suggested that in order to evaluate the healthcare tokens for validity, machine-learning algorithms that have been trained on separate or disparate data sets are employed to mitigate the risk of false negatives of false positive results. It is also suggested that since each of the peers is performing work to render the validity opinion on a transaction, it is possible for the peer to receive compensation for the work, for example in the form of a virtual currency.

The document notes that each block in the chain can be reviewed to analyze the path taken by a patient and that this would be of high value with respect to patients that have been prescribed similar, if not the same, drugs. Also, it is stated that healthcare transactions after the prescription is fulfilled can be analyzed to establish correlations of healthcare outcomes across patient populations.

The approach that a peer generates the validity token to render a validity opinion is considered to be advantageous because then, multiple entities, possibly non-affiliated entities, participate in the processing of the healthcare transaction, mitigating the risk of fraud.

The prior art also suggests to supply behavior analytics information as evidenced by historical healthcare block chain information to the various marketplaces such as Amazon, Google etc. The marketplaces would then leverage such personal or demographic information to enable service providers to deliver highly targeted healthcare content to consumers, subject to privacy constrains. In this context, medical data custodians are suggested to generate healthcare campaigns that are triggered based on features of the historical healthcare block chain information. It is suggested that access to the block chain can be offered to entities such as insurance companies, hospitals etc. The insurance company could then apply actuarial algorithms to build risk tables without necessarily requiring patient identification of private information by analyzing sanitized data.

According to US 2018/0048461 A1, while for legal or regulatory reasons identities need to be known in areas such as healthcare or corporate banking, in many block chain applications using public/private key pairs, the true identity of owners of the private key often are unknown. The document thus suggests a mapping between private key holder information and block chain credentials using a block chain identity translator. The use of this translator in blind studies is discussed, where participants use their anonymous block chain information to perform actions in the study; once the study has completed, the identities of the participants shall then be determined using the translator. In a similar manner, law enforcement shall use the translator to identify transactions signed with an anonymous block chain account which the user however has registered with the block chain identity translator. It is also suggested that the translator may run in the Google cloud computing engine, Amazon EC2 or other virtual cloud computing instance. It is suggested to confirm registration has taken place by digital signatures based on published and private keys of the certificate authority. The way a key can be verified is described also, and methods are described to verify that a certificate has not been revoked.

From US 2018/0103042 A1, an automated data authentication and service authorization via cryptographic keys in a private block chain is known. It is suggested that an individual or entity may securely store on the block chain all records relevant to service providers and then provide the service providers with secured access to said record such that the providers may access only those specific records for which they are authorized. To this end, a system for authenticating records is suggested having an upstream network system with an upstream application in operative communication with the downstream application wherein the upstream application comprises a private block chain comprising at least one data record and wherein the private block chain has a plurality of nodes comprising at least one miner code that can validate certain data within the private block chain and authenticate the data record of private block chain such that the downstream application can detect and decrypt the authenticated data record. The cognitive applications are suggested to be implemented so as to include inter alia healthcare services and financial services. It is also suggested to enable the management of a variety of data and metadata associated with various cognitive insight projects and to associate the data and metadata with billing information. It is noted that the use of real-time streams such as social media streams or device data streams is also suggested, for example medical devices tracking the patient's vital signs. The document suggests that patients could be informed if claims have been payed and an explanation of benefits be provided. It is suggested that payments could be initiated by smart contracts and that information provided to the patient and the provider may be structured to conform to confidential requirements such as the Health Insurance Portability and Accountability Act of 1996.

From US 2018/0165416 A1, a method for providing healthcare-related block chain-associated cognitive insights using block chains is known. The document states that while big data analytics holds the promise of extracting insights by uncovering difficult to discover patterns and connections, so-called dark data, that is data that is either not collected, neglected or underutilized is an important factor in handling big data. In view of this, it is suggested that a cognitive platform generates cognitive insights. The cognitive insights are to be published to consumers such as public or private block chains, business intelligence applications or databases. It is suggested that data from medical devices tracking the patient's vital signs can be uploaded to a cognitive platform. The prior art document suggests that a private universal knowledge repository can be different from a public block chain knowledge repository and that knowledge elements stored in the private universal knowledge repository may be anonymized prior to being provided for inclusion in the public block chain knowledge repository. It is also suggested that an unsupervised learning machine may be implemented and that an unsupervised learning machine learning algorithm is not given a set of training examples, but attempts to summarize and explain key features of data processes, for example unlabeled data associated with the block chain. Furthermore, in one example, it is stated that a block chain associated cognitive insight may be provided to a healthcare insurance claims processor, recommending that an insurance claim associated with a particular claim be paid to a healthcare provider and that a process may be initiated informing a patient that the claimant has been paid and an explanation of benefit is provided.

US 2018/0203744 8 A1 relates to a data ingestion and analytics platform and notes that in generating insights from big data analytics, where a high variation in the incoming data rates may occur, the granularity of process data may vary, and high-availability and robustness are needed. In view of this, the data processing is suggested to comprise at least one processing layer split into plural lanes with an initial data ingestion layer operated for ingestion of data and routing said data to one of said plural lanes.

From US 2018/024 8981 A1, a personal care system employing block chain functionality is known. It is stated that it would be highly beneficial if multiple aspects of personal care could be recorded in an orderly manner and personalized care directed to the specific needs of an individual user could be provided. In this respect, a personal care device configured to maintain an interactive diary for the user is suggested and hardware personal care modules are suggested for assessing user healthcare needs and for providing healthcare information and user specific recommendations to the user. In particular, a portable device is suggested to be taken with the user while traveling long-distance and connecting with the base device such that the user may record desired information and provide the information to the base location at a later time. Examples given include the suggestion to assess the internal ear, determine a degree of hearing loss, assess buccal mucosa, tongue, mouth floor, teeth and gums, analyzing convex nail curvature, that is the angle between the nail and the nail bed, assess a swelling around the breast and armpit, ACNE, sleep/wake cycle and so forth. It is suggested that "health points" can be earned by users via a reward system for healthy behavior and that a user may redeem themselves for medical examination or medical related equipment or services. To this end, a block chain functionality is suggested. Furthermore, it is suggested that treatments can be subject to a contract where the actual payment will then depend on the outcome of the treatment relative to a result previously agreed upon.

US 2019/0027237 A1 relates to a block chain network for secure exchange of healthcare information. The document assumes that electronic medical record systems if proprietary may impose heavy paperwork on physicians and staff, resulting in reduced patient quality of care while at the same time reducing opportunities for improving medical diagnosis and treatments by performing anonymized aggregate data analysis using machine learning or other techniques. In view of this, it is inter alia suggested that a user such as a physician may be authorized to access specific health records or be denied access. However, the document is also aware that each record may introduce unintended errors or the risk of fraud or record certification and that accordingly; electronic medical record systems must meet the needs of both healthcare providers and patients. The document notes that block chain technology that can support any type of distributed application with centralized authority may be undesirable and that by using a distributed ledger of transactions, trust and integrity can be established without using third-party intermediaries. The document thus suggests a server configured to receive a transaction from a client device via a publicly accessible network, wherein the server authenticates an identity of the client device prior to forwarding the transaction; and a private blockchain network comprising: a data aggregator node configured to receive the transaction forwarded from the server and distribute the transaction to at least a portion of a plurality of processing nodes, wherein each of the plurality of processing nodes executes a respective blockchain client configured to maintain a blockchain having contracts; and a forwarder node configured to, in response to detecting an event indicating that the transaction was successfully processed by a respective contract, transact protected health information in a data store separate from the blockchain.

From WO2018/037148A1, a method and apparatus for block chain verification of a healthcare prescription is known. It is stated that patients visiting another country may have problems because a prescription valid in a first country may not be valid in a second country and because patients would not know which pharmacy could be trusted to give valid medicines. Furthermore, paper-based prescriptions are stated to be subject to forgery and that misuse may arise, such as fake doctors issuing prescriptions or real doctors prescribing too much or a single person getting too many prescriptions from multiple doctors. The document suggests using block chain technology to allow use of prescriptions across country boundaries, to save in costs required to build and maintain prescription databases and to minimize abuse possibilities that could cause death or support crimes. In one example, it is suggested that a certified doctor creates a prescription and issues a transaction for the transfer of ownership of the prescription to a person, publishes the transaction in a block chain if this is allowed by the certificate of the doctor. The transaction is to be "signed" by a government entity that approves the prescription and publishes this in the block chain. Then, the prescription can be transferred to a certified pharmacist by the patient, this transfer can be published and the patient can be provided with the medicine.

From WO 2018/039312 A1, a block chain-based mechanism for secure health information resources exchange is known. The document states that entities that store healthcare records containing protected health information must implement proper mechanisms for compliance to legal regulations and for managing them. It is also stated that different electronic health record systems are not interoperable with each other. It is suggested that a user such as a patient may be able, via an application executing on a client system, to set conditional permissions for the respective health information resource. These conditional permissions are suggested to be used to generate a permission that may be sent to a distributed ledger or healthcare block chain system to invoke an executable smart contract within a healthcare block chain.

Accordingly, the use of block chain technology in the context of success-based reimbursements in the healthcare ecosystem is well known. It will be understood that where only few agreements need to be met, success-based reimbursements could be calculated and determined on paper or by hand, but this will no longer be possible where the number of patients increases, where higher credibility of the models used is required and/or where agreements are to be dynamically adjusted. Accordingly, any success-based reimbursements using block chain technology, machine learning, smart contracts, big data analytics and so forth inevitably must rely on execution of methods in an automatic manner using computerized steps.

Also, as determining success-based reimbursements, this usually necessitates handling sensitive health information in large amounts. From this, questions of data security arise and all stakeholders need to have confidence in the system employed.

Then, success-based reimbursements will only be acceptable to all stakeholders if the actual reimbursement is considered fair.

In view of this, it would be advantageous to strategically guide stakeholders such as life science companies, hospitals, patients, national payer and insurance company through a process of a dynamic pricing arrangement, to define outcomes and pricing in a manner all stakeholders can trust, to collect, reconcile and manage data even though such data is particularly sensitive, monitor and assess performance and create transparency and trust. Furthermore, it would be preferable to provide outcome data in line with data protection regulations in respective jurisdictions to allow an improved development and assessment of pharmaceuticals and treatments. It would also be preferred if the process could be used to speed up the access to market time for newly developed drugs.

It can be anticipated that success based payment or at least determination of a value-based price need not be restrained to pharmaceuticals but that other healthcare instruments such as wearables, lanyards, medical devices, clinical examinations and so forth might also be subjected to a patient specific or general success based pricing.

Furthermore, it might be advantageous and in the interest of all stakeholders to gain new knowledge from data collected in the course of evaluating the success of a given treatment and to provide such knowledge to those seeking to improve medical treatments.

It is obvious that not all of the above mentioned advantages and preferences need to be obtained to provide an improved healthcare system, or, more generally, an improved way of meeting agreements or of using data. However, it will be understood that achieving at least some of the objects at least partially would be preferable.

In certain areas of machine learning, a problem exists in that from a large multitude of high dimensional data points, which have a very large number of parameters, information needs to be derived. In the context of healthcare systems, such parameters might be health -related parameters such as blood pressure, pulse rate, weight, blood cholesterol values, body temperature, Overall Survival (OS), Progression Free Survival (PFS) and so forth. The data points could represent the temporal development of such values for a plurality of different patients and the information that needs to be derived could be the success or progress of a medical treatment.

Techniques are known to determine the most relevant set of parameters, such as principal component regression techniques, multi-linear regression and so forth. In machine learning, neural networks such as convolutional neural networks or graph neural networks can be trained.

Both the parameters identified as particularly important in statistical analysis techniques and the parameters of a machine-learning model resulting from such a training will depend on the particular data set used for training. It is obvious that larger data sets will result in more stable parameters having a higher statistical relevance. However, there frequently exists a situation where the initial data set is either not large enough or is so large that not all data can be used for training. In such a case, it is useful to re-iteratively re-train the system.

In particular cases, there might even arise a situation where the training data set is known to not be fully representative of the data set from which information will have to be derived later on. For example, in the context of healthcare, two parties such as a pharmaceutical company and a health insurance company in a given country might agree that any payments for treatments should be made success-based, but would then need to reach an agreement upon the conditions under which a medical treatment is considered to be successful, even though both parties might initially lack sufficient experience with the particular treatment and thus the parameters that influence the success.

Sometimes, in such a case, the two parties in a given country could base their agreement on data obtained in another country even though the population in the other country might have different lifestyle and eating habits, be subjected to more or less UV radiation, higher or lower ambient temperatures and so forth, all influencing the outcome of a medical treatment. In such a case, rather than postponing the agreement, it would be reasonable to meet the first agreement fast and to then reiterate the contract once adequate data with in the first country has been gathered. It might even be possible to agree on certain parameters that should be taken into account when reiterating the initial agreement.

Similar problems might exist in multiple technical areas, for example, where a plurality of sensor signals from technical devices such as automobiles has to be evaluated so as to derive a likelihood that certain repairs need to be carried out. However, even where such data is known for a given car model of a specific manufacturer, the likelihood of repair might be different for a succeeding model. In addition, different sensors for different parameters might be used in different cars. Accordingly, the initial assumptions based on the experience gained with other car models would be imprecise.

Where an initial agreement or model is known to be based on imprecise assumptions, it generally is in the interest of all parties to amend any model or agreement initially met as soon as possible.

In this manner, problems that might arise in evaluating new data can be avoided. For example, in the context of a success based payment for medical treatments, assume that the success of the treatment is judged based on results from a different country and that in this different country, a reduction in blood pressure has been found to be highly correlated to the success of a treatment. Now, it would be possible that the treatment of a specific patient is considered unsuccessful either because the blood pressure has not been reduced to the extent expected in view of the experience gained in another country, although otherwise the patient is fine, or because it actually has not brought about any improvement at all. The lack of blood pressure reduction could be caused either by an error made when measuring the blood pressure or because in the peer group of the respective patient, the successful treatment simply is not related to reduction in blood pressure at all, for example due to a genetic predisposition locally predominant or due to a general physical constitution of the patient.

Thus, even though an initial agreement has been met, any reasonable party would agree that it would be unfair to deny payment for the treatment of a patient simply because the blood pressure does not show any reduction as the parameter has been measured erroneously or as in the peer group even a successful treatment will not lead to reduction blood pressure. However, both parties will also agree that denying payment is fully justified where no actual improvement made.

It will be understood that it would be helpful to improve the model or amend the contract to reflect those patterns not caused by erroneous measurements. It would also be helpful if amendments to the initial contract could be made as fast as possible; and generally, in the context of machine learning models, it would be helpful to amend the model as fast as possible. It would also be helpful if this could be done in a manner allowing success-based payments. In view of the large amounts of data that need to be handled, this should be done in an automated, computerized manner. It would be preferred if this could be done in a manner where the data processing system is a machine or self-learning system.

Machine learning systems usually are trained using the training data set in order to establish a machine model. Following the training, data can be input into the machine model in order to obtain the response of the machine to the input.

It is obvious that the quality of the training data will influence the quality of the response.

Regarding machine learning, in WO2/059746 A1, it has been stated that machine learning generally assumes that all training data and test data comes from a common distribution but that certain subsets of the data may nonetheless share regularities with each other but not with the rest of the data. In the cited document, these subsets are called localities and it is stated that taking advantage of local regularities can help a learning method deal with limited labeled training data because the local regularities are often simpler patterns and can be described using fewer parameters. The document assumes that further to localities, global regularities valid of an entire data set also exist. It is suggested that descriptions of global regularities are initially provided to a working database and that a candidate subset is then identified which is likely to be a subset in which local regularities are found. It is suggested to provide tentative labels for the given data set and to convert some of the tentative labels to "confidence labels". Then, it is suggested to revise global regularities based on the confidence levels in a refining iterative operation. Accordingly, the reiteration uses the initial data set that aims to improve the evaluation thereof.

Improving a machine learning system for creating and utilizing an assessment metric based on outcomes is suggested in WO 2017/117 150 A1. It is stated that in healthcare, quality is currently measured using process metrics and customer satisfaction. The three most common outcome quality measures utilized are stated to be length of stay, readmission rates and mortality rates; the document observes that medical and pharmaceutical costs are only a portion of the true cost to manage a patient's condition and that a need exists to reduce the overall costs. It is suggested that the machine learning system obtains data from databases of providers, employees, clinical evaluators and employers. The clinical evaluator shall visit an employee initially to perform a physical and periodically thereafter, providing continuing input to a machine learning system, which allows the system to learn so that it can adjust quality factors based on changing conditions. The system shall create a quality score and the scoring system shall be constantly adjusted and updated with both computer-generated data and human input from clinical evaluators. In one example, episodic patients are analyzed based on procedures tied to a specific condition and duration and it is suggested to analyze claims where a rule was not satisfied in context with other claims to determine if such claims contributed to the overall cost of the episode. While this may help to improve the system, it will be understood that the learning system of the prior art is bothersome and expensive in view of the human evaluation necessary.

In WO2018/098077, reference is made inter alia to "unsupervised learning" in which the machine is not given data classified already but uses the machine for abnormality detection. Reference is made to "transfer learning" which is stated to be a process of a machine storing information used in properly solving a first problem to solve another problem of the same or similar nature as the first. Furthermore, "active learning" is mentioned and stated to be a process of machine learning in which the machine selects a set of examples for which to receive training data, rather than passively receiving examples chosen by an external entity. It is suggested that the machine can be allowed to select examples that the machine determines will be most helpful for learning, rather than relying only an external human expert or on an external system to identify and provide examples. The document suggests that in an imaging system, a deep learning network generated and deployed from a first training-learning network can be assessed and that feedback can be provided.

Generally, it should be understood that in machine learning, it is known that new or unknown data the machine learning system was not aware of during training (that is, which did have no correspondence in the training data) may be encountered and it has already been suggested to identify corresponding patterns embedded in a large amount of normal data that do not conform to an expected behavior.

Anomalies, outliers and exceptions may constitute such new or unknown data. When producing, collecting, processing and analyzing data, such outliers can come from many sources and hide in many dimensions. The most common cause of outliers in a data set has been stated to be data entry errors (human errors), measurement errors (instrument errors), experimental errors (data extraction or experiment planning/executing errors), intentional errors (where dummy outliers are fed into a system to test detection methods), data processing errors (e.g. by incorrect data manipulation or unintended data set mutations), sampling errors (e.g. by extracting or mixing data from wrong or various sources), or the outliers are "natural". Those "natural" outliers not due to intentional tests or errors are called novelties. Detecting novelties has already been the subject of considerable effort in data processing; in particular as detecting outliers can constitute a high computational burden.

Reference in this context is made to the "Review of Novelty Detection Methods" by Dubravko Miljkovic. Here, it has been suggested that during normal operation of a system, features lie within a normal region of the system while other points are outside of this normal region. The document then divides novelty patterns in three groups, namely point patterns, collective patterns and contextual patterns. It is stated that in neural networks the basic idea is to train the neural network on a normal training data set and to then detect novelties by analyzing the response of the trained neural network to a test input. If the test input is "rejected", it is a novelty. Similar definitions for novelties are given for multilayer perceptions, self-organizing map, habituation based, neural trees, auto-associative networks, adaptive resonance theory networks, radial basis functions network and others. It is also suggested that novelties can be detected by a distance-based approach, where the point is considered a novelty if the distance to K-NN neighbors exceeds a predefined threshold; by an identity based approach where the data set is sparse, by clustering based, statistical approaches such as parametric approaches extreme values, hidden Markov models, hypothesis testing or nonparametric approaches. Note that in the document cited, literature has been cited relating to outlier detection. These outlier detection methods could be applied for the method described herein. Thus, both the Miljkovic - paper and the documents cited therein are incorporated herein fully by reference.

In "Novelty Detection: A Review- Part 1: Statistical Approaches" by Markos Markou and Sameer Singh in Signal Processing 83 (2003) 2481 - 2497, it has been stated that a machine learning system can never be trained on all possible object classes the system is likely to encounter and that therefore, novelty detection is needed, although no single best model for novelty detection exists and the success depends both on the type of method used and the statistical properties of data handled. Accordingly, in the review, a number of novelty detection techniques are discussed. In one example, it is suggested to first remove "outliers" from a data training set to ensure pureness thereof and to then determine a surface around the set of "healthy signals". If a new signal then falls outside this surface, it is deemed to be novel. In an example, it is suggested that every incoming point be compared to every point in the healthy set. Given that, training sets should be rather large; this implicates a large computational burden. A clustering approach is discussed aiming to partition data into a number of clusters where to every data point, the degree of membership to each of the clusters can be assigned; novelty shall be detectable by comparing the degree of membership against thresholds to determine whether or not the data belongs to a cluster and novelty shall be given when a sample belongs to none of the available classes.

According to the paper "Robust Decision Trees: Removing Outliers from Databases" by George H.John in KDD-95 proceedings, p. 174-179, outliers are defined as "a case that does not follow the same model as the rest of data", including not only erroneous data but also "surprising veridical data". In view of this, the author suggests to derive from a database a decision tree which initially can be complex but fits a database well. Then, to make the complex decision tree simpler, an error associated with every node thereof is compared to the error obtained if the node would be pruned into a leaf. If the estimation error becomes smaller, the note is pruned and thus complexities reduced.

For medical databases, the problem of "Outlier Mining in Medical Databases by using Statistical Methods" has been addressed by K. Sirmani and Manjula Sanjay Koti in ISSN: 0975-5462, Vol. 4 No.01 January 2012 239-246. These authors suggest that the extraordinary behavior of outliers facilitates the exploration of valuable knowledge hidden in the domain and help decision-makers to provide improved, reliable and efficient healthcare services, that medical doctors can make sensible predictions of the vast medical databases and that the most promising area of outlier mining is a thorough understanding of the complex relationship that appeal with regard to patient symptoms, diagnosis and behavior. The authors state that outlier detection of the medical public health domains typically work with patient records and that data can have outliers due to several reasons such as abnormal patient condition or instrumentation errors or recording errors. h as patient age, blood group and weight and that data might also have temporal as well as spatial aspects. The authors also note that outlier detection is a very critical problem in this domain that requires a high degree of accuracy.

Regarding a decision whether a particular test results is abnormal, other authors have stated that the decision may depend on characteristics such as gender or age or the occurrence of a particular disease, e.g. among pet owners, or be scattered across various hospitals of the city and that these parameters might indicate problems e.g. with a corresponding vaccination program in a city, compare the presentation "Outlier Detection Techniques" by Hans-Peter Kriegel, Peer Kröger and Arthur Zimek during the 2010 SIAM International Conference on Data Mining.

Furthermore, for the sake of completeness, reference is also made to the paper "A review of novelty detection" by Marco A.F. Pimentel, David A. Clifton, Lei Clifton, Lionel Tarassenko, in http://dx.doi.org/10.1016/j.sigpro.2013.12.026.

It is an object of the present invention to provide novelties for the industrial application.

According to a first aspect of a first embodiment of the invention, an automated data processing method is suggested comprising the computerized steps of training a machine learning model based on a first training set of data, evaluating new data with the trained model and identifying outliers, adding selected outliers to a training set and training the machine learning model with a second training set comprising the selected outliers.

It will be understood that the computerized steps in a preferred embodiment will be executed in a fully computerized manner without the necessity of human intervention. It is possible to effect training of a machine learning model in an automated manner, even though the training data may be labeled with tags by humans. Nonetheless, in certain instances, labeling of training data by humans will not be necessary and it is obviously preferred to use a training data set that need not be labeled by humans. For example, in certain instances, electronic patient data files might be available from which the labels can be derived automatically.

Then, the evaluation of new data with the trained model will also be executed in a fully computerized manner. Note, however, that implementing rules for normalization of data ingested might still be done by humans prior to the evaluation of data ingested.

Furthermore, the identification of outliers can be done in a fully automatic manner as computerized method even though in certain instances, parameters might be set by a human operator, for example defining an expected noise behavior of central signals such as the glucose level signals, blood pressure sensor signals and so forth.

Among those data points identified to be outliers, a selection will then be carried out. In other words, outliers are not used blindly for training simply because they are outliers. Rather, only an outlier that has certain additional properties other than simply being an outlier shall be added to the training set for the reiterated training. Such a selection could be fully automatic, for example by selecting a fixed fraction of all outliers that have been found to be not caused by errors, by selecting a group of outliers, where one or a plurality of parameters has but little variation; the selection could be semiautomatic for example in that suggestions are presented to human operator who has to confirm the selection; or the selection could be done fully manually. It will be understood that where a sufficiently large number of outliers is found in the data to be processed, a manual selection or a semiautomatic selection becomes rather tedious. On the other hand, there is a certain likelihood that the outliers may be due to a specific, previously unknown medical condition and that, therefore, the information related to the outliers may help to improve treatment, prevent false treatment or avoid unexpected complications during the treatment if a sufficiently trained medical expert takes note thereof. Therefore, the decision as to whether or not the selection is made in an automated manner, in a semiautomatic manner or in a fully manual manner may depend on the specific disease treated, the expertise already given in the specific field of treatments, the amount of data available and so forth. Also, the conditions of patients that are associated with the outliers can be decisive. It will be understood that the decision whether or not the selection is made automatically, semiautomatic, or manual can also be made automatically or by a human operator. However, in a preferred embodiment, the selection of outliers will be done by a computerized step; also, in a preferred embodiment, the selection of outliers will be made in view of specific properties the selected outliers have.

It is important to understand that according to the invention, outliers are not discarded or disregarded, but that rather the information related to the outsider is used as efficiently as possible to improve the initial model. By adding selected outliers to a training data set and by retraining a machine learning model, a very fast adaption of the machine learning model response to input data showing a slightly but noticeable different pattern compiled to the data pattern found in an initial training data set in lack of better data can be achieved. This helps to launch a machine-learning model significantly faster than before. Also, there is less need to "purify" data for a training set. It will be understood that this helps to reduce the cost or effort to launch a machine-learning model.

In a preferred embodiment, it is suggested that in the automated data processing method the first training set of data is obtained from a first source of data, the new data evaluated for identifying outliers comes from a second source of data and the second training set comprises both data from the first set and the selected outliers, such that the automated data processing method comprising the computerized steps of training a machine learning model based on a first training set of data obtained from a first source of data, evaluating data from a second source of data with the trained model and identifying outliers, adding selected outliers to a second training set and training the machine learning model with a second training set comprising the selected outliers.

In other words, the source of data to be evaluated is different from the source of data used for training. This is important because frequently, not only the sources of data are different, but also the pattern of the data coming from different sources will be different. It should be understood that while the present invention is mainly directed to medical healthcare systems, in particular data processing systems used in medical healthcare for determining success based payment, the selection of data points identified to relate to outliers and the addition of selected data points to the data training set in the machine learning model is helpful in a large number of machine learning model applications. It can be anticipated that a large number of cases exists where a training data set is not easily available prior to launching the system, for example because no real data had been available for training; i.e. when building a new machine; as an example, a manufacturer of cars may launch a car model where parameters such as fuel injection may be determined in response to a large number of sensor signals-however, the best response can only be determined in view of sufficiently large data sets which in turn are not available during the initial tests. Therefore, it might be possible to use as a first source data obtained with another car model or synthesized data and to then adapt the machine-learning model in view of real data. Also, the case may occur where tagging of data is impossible, for example in social media networks where new hashtags emerge, or where tagging is too expensive.

It should be noted that a very large variety of methods exist to identify outliers. It is emphasized that in the introductory portion of the present document, literature has been cited and incorporated by reference in this respect. In a preferred embodiment, outliers are identified by at least one of a multivariate analysis, Chauvenet's criterion, a method according to ASTM E178 Standard Practice for Dealing with outlying Observations, Mahalanobis distance and leverage, Peirce's criterion, Tukey's fences, a distance based anomaly detection, a density based anomaly detection and a local outlier Factor. Explicit mention is also made of a Z score or Extreme Value Analysis. It will be understood by a person skilled in the art that outlier tests such as the Mahalanobis distance may be of particular use given that they can be used to identify unusual combinations of 2 or more variables. However, the average skilled person will also understand that while some of the outlier tests listed may be preferred, the list above is by no means exclusive.

From the above, it will be understood that data points may be outliers for a variety of reasons. It should be understood that those data points that are found to be outliers, that is that are identified as outliers, could thus be classified such that the classification either relates to at least one of a data entry error, a measurement instrument error, an intentional error, a data processing error, a sampling error or, alternatively relates to novelties.

In certain instances, it may be preferred and helpful to distinguish outliers relating to one source of errors from outliers relating to a different source of errors. For example, where patient data is collected, the data points may constitute outliers because an error has occurred in measuring a blood pressure, in measuring a heart rate or in measuring the number of steps the patient has taken every day. If such errors are distinguished, it is in certain instances easy to see e.g. that all patients for whom an error has occurred in measuring the blood pressure have been treated in the same hospital and that correspondingly on the one hand, the hospital should be informed that the blood pressure data is incorrect and on the other hand, the correction of such error relating to a given patient group becomes feasible. Accordingly, the classification of errors might improve both the acquisition of data and reevaluation of data acquired. However, for simply improving the machine-learning model, it would be sufficient to just distinguish whether or not an outlier is due to an error at all. Thus, in certain cases, the classification may be a simple flagging of outliers.

From the above remark, it should be understood that there is absolutely no necessity to discard those outliers that relate to errors. In contrast, where certain errors occur, an attempt can be made to correct any such errors. However, while even those outliers that relate to errors can be helpful to improve the overall quality of the system and the overall quality of the data processing, in a preferred embodiment those outliers relating to novelties are separately collected into a set and a selection for inclusion into the second data is made from this collection.

In a preferred embodiment, for selection, a machine-learning model is trained based on the collected outliers and based on those collected outliers that are best described by the model. In other words, if a sufficiently large number of outliers has been collected that do not relate to simple measurement errors or the like, but are due to the medical conditions observed in a sufficiently large group of patients, it is helpful to try to determine relevant pattern found in this group; then, if a pattern is found in the group of collected outliers, those outliers that correspond best to the pattern or to one of a plurality of patterns can be selected for addition to the training set of the machine learning model to be reiterated. In this respect, it should be noted that in treating patients in different countries, a different outcome in a different country may have a variety of reasons, for example, because in one country, patients are treated despite also suffering from another disease while in the other country, patients are denied treatment if they suffer from another disease; also, in different countries a significant portion of patients may have a significantly different diet, leading to a different response to treatment and so forth. Where this is the case, several groups of outliers should be identifiable provided the selection of samples is large enough. These groups could be identified using a machine-learning model on the collection of outliers. In this way, data points could be identified that clearly belong to each group. The data points found to belong to a group of outliers could then be selected for addition to the machine-learning model to be reiterated.

It will be understood that this method of outlier selection or, more precisely, selection of identified outliers, will constitute a preferred embodiment or part of a preferred embodiment. From this, it should be obvious that not all outliers are simply added blindly to an initial set of training data, but that a careful automated selection of those outliers by computerized steps is effected that will give the best improvement to an initial machine-learning model. This even holds where the actual process of outlier selection for addition to the data training set is somewhat different from the method relying on a further machine-learning model as outlined above.

For success based payments, it should be mentioned that based on collected outliers, it would be possible to meet a second or "child" contract relating to specific groups of outliers or the pattern learned by a second machine learning model on the groups of outliers. Accordingly, it would be possible to have a first agreement for success based payments, to pay for any positive outcome according to the first agreement and to complete the first agreement by a second, child agreement based on outliers on the first agreement, with additional payments for certain patients with outlier data as per the child agreement.

It will be understood that for training machine-learning model based on collected outliers, a large number of outliers is helpful. The number of outliers collected shall be considered large if the number is at least 1%, 2% 5%, 10%, preferably 15%, in particular preferred 20%, 25%, 30%, 33%, 50% or 75% of the number of entries in the training data set to which the outliers are to be added. Where outliers are grouped prior to the selection and where more than one group is found, the number preferably is larger than 5%,10%, preferably 15%, in particular preferred 20%, 25%, 30%, 33%, 50% or 75% of the number of entries in the training data set.

Where particularly strong deviations in the response of patients to medical treatment relative to the initial training data set is found, it is preferred if the number is at least 15%, preferably 20%, 25%, 30%, 33%, 50% or 75% of the number of entries in the training data set. It would be understood that in a case where particularly strong deviations between the ensemble of data to be processed and the data ensemble constitute hearing the data training sets exist, the data training sets will not be a particularly good representation of the actual data to be processed; therefore, in case of particularly strong deviations, the impact and influence of the initial data training set only machine learning model should be reduced as soon as possible. Where the plurality of iterations is done repeatedly, it is possible to reduce the number of outliers selected for addition to the training data set from iteration to iteration in the expectation that the training data set becomes better and better with each iteration. It is possible to simply add every outlier selected to an existing data training set or to exchange some of the data within the data training set against outliers selected. Exchanging data in the data training set against outliers allows keeping the computational expense of machine-learning constant for all iterations; adding data points to a given data set and thus increasing the size of the data training sets will increase the computational expense that may lead to better machine-learning models. Note that in machine learning, a data set is frequently split into two parts, namely into a part used for training the machine model and a part used for verifying the machine model learned. In such a case, the outliers selected can either be added to the data set that is then split into two parts using standard procedures such as random selection within the data set, or, alternatively, some of the outliers could be added to the first part while other outliers selected are added to the control group.

Also, in other cases, it would be possible to have an entirely new data set to which the selected outliers are added; for example, in medical healthcare, a situation might arise where a first contract has been agreed upon in a first country A, and thereafter, a large number of countries B, C, D and E follows. Here, the initial data set could rely on a random selection of patients in the first country A and the machine-learning model could be trained using this initial data set; then, to improve the evaluation of the success of the treatment in new country B, outliers observed in country B could be selected, but instead of adding them to a random selection of patients from just the first country A, data of random patients from the now larger number of countries A-E is selected for a new data training set and the outliers found in country B and selected for addition are thus added to this new random data set. In this manner, improvement of the machine-learning model is expected to be faster and the number of iterations necessary to reduce the number of outliers observed due to reasons other than errors or intentional erroneous test data is expected to be lower. While in the example given, reference has been made to a random selection of patients in the first country A, it should be understood that rather than using data related to real patients, synthetic data could also be used to establish a machine learning model. Furthermore, the set of data for machine learning could obviously be based on patients from more than one country or, where large regional differences are given, could be based on patients from one region, even if such a region (e.g. the black forest) is smaller than an entire nation or in case the region comprises patients from several nations (e.g. Tyrolia).

Regarding the above mentioned particularly strong deviations, it will be understood that particularly strong deviations can be judged in some embodiments to be present if the overall percentage of patients for which a specific treatment works deviates by more than 5%, in particular more than 10%, in particular 15%, in particular 20%, 25%, 30%, 33%, 50% or 75% from the percentage of those patients that were considered in the data set for the initial or previous training of the machine learning models. In addition, in some embodiments a particularly strong deviation can be judged to exist if the deviation has at least a 3-sigma significance, a 4-sigma significance or a 5-sigma significance. Furthermore, in some embodiments, a particularly strong deviation might be considered to exist if the absolute percentage of successful treatments differs by a large amount from the percentage in the training data set, for example by at least 5%, 10%, 15%, 20%, 25%, 30%, 33%, 50% or 75% percent, and, at the same time, the data training set is large enough so that the difference in the percentage is statistically highly relevant, in particular, having at least a 3-sigma significance, a 4-sigma significance or a 5-sigma significance.

In one embodiment, an automated data processing method is suggested, wherein data relating to a contract are processed and the contract has at least one condition agreed upon that can be fully or partially fulfilled, and the degree of contract fulfilment is automatically determined in view of the data processed relating to the degree of contract fulfilment.

It will be understood that the improvement in machine learning is not necessarily restricted to contract data and their evaluation. Thus, emphasis should be made that the feedback provided by the data processing method of the present invention is applicable to a large number of applications. In particular any application that employs machine-learning techniques such as convolutional neural networks, graph neural networks and so forth that allow determining whether or not a given data point can be considered an outlier based on predefined statistical methods may profit from the invention and the feedback suggested herein. It will be understood that the present invention achieves a faster improvement of the system response in all technical areas with machine learning and can be used in a variety of areas such as control of automobiles, laundry machines, production machines, dishwashers and so forth. Nonetheless, the invention also is of particular advantage for contracts in general, and smart contracts in particular, as the selection of outliers identified and the addition thereof to a training data set will help to improve the response of the machine learning model particularly quickly, so that where conflicting interests of different parties need to be taken into account, any initial imprecise response will not persist for a very long time and will thus be more easily acceptable to all parties involved, which in turn allows to meet an agreement faster. This holds in particular in cases where the way in which the agreement initially met will be amended is also agreed upon upfront or where it is obvious to both parties that improved data is about to become available soon so that the period of time for which an initial agreement is valid can be reduced. It should be noted that this not only has a significant economic impact, but that also new pharmaceuticals will be available faster, improving or saving the lives of patients.

Furthermore, in one embodiment, an automated data processing method is suggested wherein data related to a contract are processed and the contract has at least one condition agreed upon that can be fully or partially fulfilled, and the degree of contract fulfilment can be automatically determined in view of the data processed relating to the degree of contract fulfilment, wherein the method comprises the computerized steps of ingesting data from a plurality of sources, automatically determining an extent to which the contract has been fulfilled in view of the ingested data and in view of the at least one condition agreed upon in the contract, wherein an extent, to which the contract has been fulfilled, is automatically determined by computerized steps in response to a machine-learning model trained based on a first training set of data, and outliers are identified by a statistical analysis, and are evaluated using computerized steps, the automated method further comprising execution of at least one of the steps of amending the machine learning model by training the model with a second data set comprising the outliers, amending the extent of contract fulfillment determined, suggesting an amendment to the contract, automatically amending the contract in view of outliers selected according to the evaluation.

It will be understood from the above that while it is possible to retrain a machine learning model in view of outliers identified in the response to new data, it would be sufficient in some instances to take note of the outliers and make suggestions for an amendment in view of them rather than automatically re-train the model using the outliers. Note that a variety of possibilities exists to react to outliers. For example, the machine-learning model could be retrained based on the outliers. Then, a re-training of the machine-learning model could only be suggested. Where a machine-learning model is used in the context of smart contracts, it is possible to either automatically change the contract or it would be possible to simply suggest that amendment to a contract. Where a smart contract is to be changed automatically, an agreement could be included in the initial contract regarding the conditions under which the initial contract may be automatically adapted or altered. However, in other instances, it might be deemed necessary by parties to the contract to explicitly agree to any amendments and, also, the situation may arise where persons skilled in the art (such as medical doctors in the case of contracts relating to healthcare) are to assess the conclusions derived in view of outliers.

Thus, the automated data processing method of the embodiment may or may not have all features described to be present in preferred embodiments.

In one embodiment, an automated contract data processing method is suggested wherein the contract is a smart contract, the smart contract has at least one condition agreed upon that can be fully or partially fulfilled, data is available relating to the degree of contract fulfilment, and the degree of contract fulfilment can be automatically processed, the method comprising the computerized steps of ingesting data automatically obtained from a plurality of sources in accordance with the smart contract, automatically determining an extent to which the contract has been fulfilled in view of the ingested data and in view of the at least one condition agreed upon in the contract, wherein an extent, to which the contract has been fulfilled is automatically determined by computerized steps in response to a machine learning model trained based on a first training set of data, and outliers are identified by a statistical analysis, and are evaluated using computerized steps, the automated method further comprising execution of at least one of the steps of amending the machine-learning model by training the model with a second data set comprising the outliers, amending the extent of contract fulfillment determined, suggesting an amendment to the contract and/or automatically amending the contract in view of outliers selected according to the evaluation. Note that where an initial agreement in a contract contains provisions relating to conditions under which the contract can be amended and/or the manner in which the contract is determining results such as payments to be made, meeting amended conditions and changing the manner results are determined can be thought of as "amending the contract" even though the actual contract has not been amended, but only the conditions under which for example payments are to be effected have been adapted to an improved knowledge or database as agreed upfront.

In this respect, it will be understood by a person skilled in the art that smart contracts are particularly helpful where data need to be provided to other parties as the smart contracts may be implemented such that the communication of the data relevant to the contract can be effected automatically. It will be understood that this is particularly helpful where data needs to be obtained from a large number of parties, for example a large number of hospitals in any one country.

In a particularly preferred embodiment, the contract is a smart contract relating to treatments by health care providers and health care payers, the smart contract has at least one condition agreed upon between a health care provider and a health care payer that can be fully or partially fulfilled, data are available relating to the degree of contract fulfilment, and the degree of contract fulfilment can be automatically processed, the method comprising the computerized steps of ingesting data automatically obtained from a plurality of health care providers in accordance with the smart contract, automatically determining an extent to which the contract has been fulfilled in view of the ingested data and in view of the at least one condition agreed upon in the contract, wherein a success-based payment relating to the extent to which the contract has been fulfilled is automatically determined by computerized steps in response to a machine learning model trained based on a first training set of data obtained from a first health care provider or a first group of health care providers, and outliers are identified by a statistical analysis, and are evaluated using computerized steps, the outliers being obtained from one or more second health care providers different from the first health care providers, the automated method further comprising execution of at least one of the steps of amending the machine learning model by training the model with a second data set comprising the outliers, amending the extent of contract fulfillment by one of the health determined, suggesting an amendment to the contract, automatically amending the contract, in view of outliers selected according to the evaluation.

As can be seen from this embodiment and as has been emphasized above, the use of the invention in healthcare systems is of particular advantage. This is due to the fact that on the one hand, a situation is frequently given where seemingly small differences from patient group to patient group may have a significant impact on the outcome of the treatment. Thus, it frequently is necessary to not only retrain the machine-learning model in view of an enlarged data set available after some time of data ingestion, in particular after some time of data ingestion from a second, different source, but also to improve the machine learning model as soon as possible to best match any current data set and to thoroughly take into account new insights available.

This may not only lead to a better model for effecting payments but may also be relevant in predicting or diagnosing adverse health conditions of patients.

In a preferred embodiment, the contract is a block-chain based smart contract relating to treatments of patients by health care providers and to success-based payments by health care payers. Here, the data that is automatically obtained from a plurality of health care providers in accordance with the smart contract may be subject to confidentiality regulations and ingesting data is done by an intermediate party different from both the health care providers and the payers.

In a preferred embodiment, the use of block chain methods is preferred because in this manner, even highly sensitive data can be transferred without the risk of being intercepted. Also, trust between parties involved such as a payer of healthcare measures and the provider of healthcare is automatically established when using block chain methods. Note that in a preferred embodiment, while the communication of data obtained from the sources is preferably based on block chain technology, the data may be stored for analysis outside the block chain. It will be understood that this facilitates the retraining of models and that additional handling of the data is simplified, for example for synthesizing anonymized data from the entirety of data ingested. In a preferred embodiment, the data based on the ingested data is thus stored by the intermediate party outside of the block chain.

In a preferred embodiment, the data ingested by the intermediate party is extracted, loaded and stored outside the block chain in an untransformed manner. This data might then be used for purposes other than just for the fulfilment or evaluation of a smart contract. As one example, it would be possible to derive synthetic data for research purposes. It will be understood by a skilled person that referring to storing data in an untransformed manner in a preferred embodiment means that what is stored is the raw data; this is preferred because error detection based on raw data is simpler. For example, where certain signals constituting part of the data are very small prior to a normalization step, it will be easily understood that such small signals will be prone to noise while any normalized data will not be related to the influence noise has on small signals. Thus, where a small signal is strongly influenced by noise, storing data in a normalized manner might prevent a user from understanding the impact of noise on given data points.

In a preferred embodiment, an automated health care contract data processing method as described above is suggested wherein healthcare contract data is processed, at least one health care provider collects data from individual patients or from a plurality of connected partners and the data ingested by the intermediate party is the data collected by the least one health care provider. In other words, a hierarchy is provided to reduce the burden on an intermediary party running machine-learning models for contract evaluation or at least ingesting large amounts of data. In addition, typically, the data will be needed locally as well, for example, where a patient transmits data relating to his health condition (such as blood pressure data, heart rate data and insulin levels) to a hospital following a medical intervention such as surgery. In such a case, a medical doctor in the hospital might supervise the progress of the patient by reviewing the data or by receiving notifications relating to anomalies so that the treatment can be adapted in view of the recovery of the patient or of complications identified.

In one embodiment, the data from a healthcare provider such as a large hospital can be transferred to the intermediate party in a block-wise manner such that information relating to a large number of patients is transmitted in only one file or in a small number of files. It will be understood that this simplifies communication between for example an intermediate party and the healthcare providers, in particular where data from a very large number of healthcare providers needs to be ingested. Thus, an automated health care contract data processing method is preferred wherein at least one health care provider collects data from individual patients or from a plurality of connected partners and the data ingested by the intermediate party is the data collected by the least one health care provider and the data obtained and is transferred in response to a number of requests smaller than the number of individuals the data relates to.

The invention will now be described with respect to the drawing, which shows in
- Fig.1: an example of hardware components usable for an implementation of the present invention and useful communication paths between the hardware components;
- Fig. 2: a diagram indicating for a part of the hardware components the flow of information used for the determination of a success-based payment;
- Fig. 3: an example of decisions to be made in determining success-based payments and in identifying outliers.

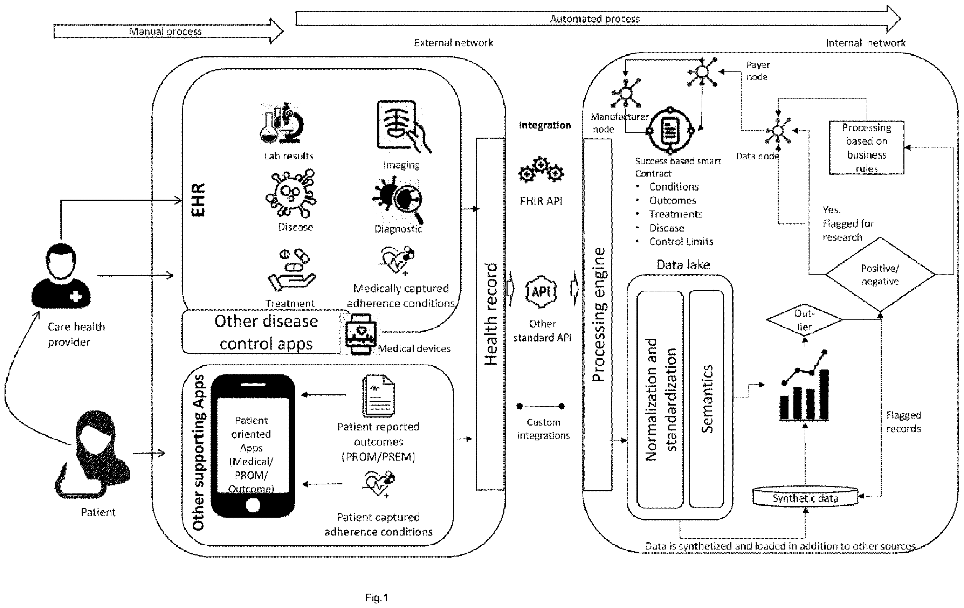

In figure 1, a system is shown that can be used in an automated data processing method comprising the computerized steps of training a machine learning model based on a first training set of data, evaluating new data with the trained model and identifying outliers, adding selected outliers to a training set and training the machine learning model with a second training set comprising the selected outliers.

In more detail, figure 1 serves to show on its left side some of the hardware necessary for healthcare providers. On its right side, figure 1 symbolizes infrastructure and its use by a service payer such as a health insurance company. In between the healthcare provider side and the service payer side, a diagrammatic scheme for explaining the way the outcome of healthcare services provided by the health care provider is assessed such that a success-based payment to be made by the payer to the healthcare provider can be determined is shown.

As shown in figure 1, an electronic health record EHR is maintained by the provider. Typically, the electronic health records of patients will be managed and stored on a server operated by the healthcare service provider, for example a central hospital server. Note that other possibilities exist instead for storing EHR data other than on a hospital server, e.g. a "software as a service" (SaaS-) EHR provider or storing data in a data cloud. While the invention could also be used in such cases, it will be discussed hereinafter context with a hospital server.

Some of the data compiled into the electronic health records may be entered directly by a human, for example a nurse or a physician; this case is indicated in figure 1. It will be understood that specific applications may be provided to help a physician, nurse or other involved person to enter data into the electronic health record; this holds in particular where data hitherto not of interest needs to be compiled into the electronic health record. Here, the corresponding app can be defined. Data may also be entered automatically into the electronic health record, for example by electronically sending the results of laboratory examinations to the server after values such as hemoglobin blood levels or the like have been determined in a medical laboratory. The server may also communicate with an app running on a smart phone of a patient to allow input of patient reported outcome measures and patient reported experience measures (conventionally termed PROM/PREM" response).

Accordingly, data compiled into the electronic health record may also comprise patient reported measures as well as data directly acquired using for example a patient's smart phone; as an example, the smart phone could be used to record the number of steps the patient walks every day. Where patient reported measures are evaluated, it is taken into account that these measures typically are highly subjective. Nonetheless, entering the PROM/PREM response into the electronic health record kept by the healthcare service provider or correlating the subjective feeling of well-being as expressed by the responses to the current treatment may be important to a physician and should thus be made available to the physician. However, it will be understood that the outcome of the success of the treatment can be assessed even though the PROM/PREM response of the patient is not entered into the electronic health record and that a possibility exists to directly transfer patient responses or other data acquired by a patient app on a patient's smart phone, for example data indicators of the distance the patient has walked at any given day, to an institution intermediate between the healthcare service provider and the healthcare service payer. Also, it should be noted that a possibility exists to directly transfer part of a patient response or other data acquired by a patient app on a patient's smart phone, for example data indicators of the distance the patient has walked at any given day, to only an institution intermediate between the healthcare service provider and the healthcare service payer. This is particularly helpful in cases where continuous or repeated treatment in a hospital is not necessary. As an example, in treating migraine, the success of the treatment can be evaluated by a clinical assessment, which could be done once a month at a migraine center, while also determining the number of days in a month a patient suffers from migraine by patient response in a smart phone app. It will be understood that a patient response may be a binary response ("do you have migraine today Y/N") or a non-binary response ("how severe are you affected by migraine today on a scale of 1 to 10? "). In this manner, it becomes possible to for example only partially reimburse the cost for a drug if a patient has suffered more from migraine than promised by the manufacturer of the drug.

Also, in situations where no PROM/PREM response or corresponding information is transferred to the electronic health record, it will nonetheless be possible to correlate the responses of the patient later on to data in the electronic health record. For example, suitable timestamps can be added to the responses or corresponding data so that as soon as all relevant data have been obtained from both the electronic health record and the patient app used for recording the PROM/PREM responses in a data lake, the responses and data from the electronic health record can be correlated. Acquiring PROM/PREM responses is of particular importance where the assessment of an outcome or success of a treatment is strongly dependent on input from the patient, for example in migraine treatment or other pain-related treatment

Regarding data acquisition by service providers, it should also be understood that while generally, a large number of different data is acquired and entered into the electronic health record for each patient, situations might occur where insufficient data have previously been acquired.

Typically, the electronic health record comprises information that a local or national body of physicians has agreed to be useful in describing the health status of patients suffering from a specific disease and in determining the way a patient needs to be treated. However, a situation may occur where physicians in a given hospital and/or in a given country are not sufficiently aware that certain other parameters have been found important in other hospitals or countries, for example levels of specific trace elements found in the blood, parameters such as glucose levels that can point to metabolic dysfunctions such as diabetes and so forth. In this context, it will be understood that the assessment of the outcome of a treatment has gained importance in the recent past and that accordingly, for a number of diseases, standardized expected outcomes to which parties involved can easily agree have been defined, compare for example the references found at the date of application at www.ichom.org. In case a parameter needed to evaluate the outcome has not been collected before, such collection will thus be instantiated. Therefore, when implementing smart contracts, in particular smart contracts based on data gathered in other hospitals and/or other countries, care must be taken that the electronic health record compiled by any health service provider contains all relevant information. It will be understood that the parameters compiled into an electronic health record may change over time with the advance of science. As an example, where new methods have been developed to predict the generation of metastasis, corresponding parameters have to be acquired.

To this end, rules can be set in an initialization phase of a smart contract so that the correct information is gathered; in particular, it is possible to set these rules such that data are entered into the electronic health record in a manner easily assessable. For example, a rule can define how often certain parameters need to be measured and in what way they are measured, for example defining that blood glucose levels must be determined after a period of at least 6 hours of fasting. It will be understood that where the rules are necessary to implement an electronic smart contract for success-based payments in the health industry, and where conditions of such electronic smart contract are set according to knowledge acquired in other countries, a situation might often be encountered in which a healthcare service provider new to the contract and new to the use of specific pharmaceuticals and/or treatment methods will have to establish the acquisition of data during an initialization phase.

It will be understood by a skilled person that where a treatment achieves an outcome agreed upon before, in the context of the present invention it will be considered successful or "a success". Accordingly, it is not necessary to completely restore health of a patient or to completely eradicate every symptom of a disease in order for a treatment to be successful. Also, situations may arise where the objectives of the treatment are not fully achieved; for example, where a patient suffers approximately 4 out of 7 days from migraine without drugs, a treatment might aim to keep the patient free of pain from migraine attacks for at least 25 days out of a 4-week-period. Where the patient is pain-free only 24 days out of the 4-week-period, the outcome is not fully met. Although a significant improvement for a patient might have been achieved, in such a case "success" will only be partial and outcome-related payments must be reduced. It will also be understood that rather than referring to the "outcome" or "success" of a treatment, reference could also be had to be of value seen in a treatment. For example, where an employee is treated, the value could relate to the number of absent days due to a disease or treatment. Accordingly, instead of stating that the payment relates to the outcome of a treatment, reference could also be had to value-based pricing.

It should be understood that the overall data acquired by the server in large medical institutions acting as service provider such as large hospitals would be substantial. Accordingly, it is vital to effective data acquisition from different sources without posing an undue communicative burden. Basically, data can be transmitted from the medical app of a patient device to the server or other hardware keeping the electronic health record by either pushing or pulling. When pulling, a predefined transmission scheme is executed, in particular as agreed between partners to the smart contract. When pushing, one or more update events of the electronic health record database and/or the patient app database may trigger transmission of data to the electronic health record. It should be noted that it is not necessary to push data into the electronic health record with every update event, in particular not in case that the update event does not justify urgent intervention by a physician. Therefore, a decision whether or not new data entries into the electronic health record should be pushed can be made simultaneously depending on a plurality of parameters such as the time since the last transmission, a judgment on the importance of new entries, the amount of data to be transmitted and the availability of suitable transmission channels such as Wifi, GSM, G4 or the like. Also, it should be noted that a large number of cases would exist where intervention by a hospital, a physician or the like will not be needed nor should specifically be prepared for, as is for example the case for pain treatment, treatment of chronic diseases or states such as obesity and the like.

Once an electronic health record is established and contains a sufficient amount of data, the success of a healthcare treatment can be determined. Note that in cases health-related records are kept for other reasons, using for example Google health, it would be possible to also use such data or to only use such data.

As the determination of success can and should be done outside of the electronic health record, it is necessary to extract the relevant data from the health record, patient app and so forth and to transmit the relevant data to an evaluation center trusted by both the health care provider and the health care payer. As indicated above, it will be understood that use cases might exist where it is not necessary to extract data from an electronic health care record; rather, where data has been acquired differently, for example using only the responses by the patient, or health related data gathering apps such as Google health, reference to the electronic health record is not necessary; nonetheless, it should be noted however that it is highly preferred to use a centralized server for at least a significant part of the data in order to simplify data acquisition and communication. Otherwise, automated data input into a system for assessing outcome of a treatment may significantly suffer from the additional communication required in particular where a very large number of patients and/or hospitals needs to be taken into account.

In the context of data transmission, it will be understood that depending on legislative measures relating to patient data privacy, existing laws, mutual trust in the healthcare industry and so forth, the determination whether or not a medical treatment has been successful basically could also be made by either the health care provider or the payer once the conditions of a smart contract has been agreed upon. However, it will be understood that significant advantages can be obtained by processing similar data from a variety of sources obtained for a larger number of patients and thus relevant to larger variations of relevant parameters. These advantages not only include an increase of trust or a financial advantage obtained by defining conditions relevant to the success of a treatment more precisely, but also include the possibility to derive additional knowledge from the vast information obtained. Accordingly, identifying outliers in the manner suggested by the present invention may also constitute an important and helpful step in devising new or improved medical treatments.

In order to retrieve those data from the electronic health record that are needed to determine a success based payment to a hospital, a physician, a drug-producing company or any other health-care provider according to a smart contract implemented between the healthcare provider and the health care payer, an interface is provided defining the information in the electronic health record needed. Note that the system is applicable in particular where the treatment uses specific drugs in a treatment and a determination has to be made to what degree a pharmaceutical company producing the specific drugs is to be reimbursed. Here, the success based payment or part thereof may go to the pharmaceutical company rather than a hospital in which the drugs are administered. A possibility would in particular exist to reimburse a hospital for the work done there, but to not reimburse the pharmaceutical company if a drug administered according to predefined schemes does not yield any success.

Also, while it will be understood that the pharmaceutical company could be seen as a "health care provider", generally, in the present description and claims, reference will typically be made to only a hospital, a physician or the like for simplicity. it will also be understood that under certain circumstances, payments can be made during the course of the treatment according to a smart contract, and, in case the treatment should turn out to be not successful, as can be determined that all or some of the payments need to be paid back. This will be considered a "reimbursement" in the context of the present invention as well.

In order to ensure that the correct data are obtained from electronic health record, that is data sufficient to determine the success or failure of a treatment, while preventing transmission of data irrelevant to the determination of success, it is necessary to define the data that actually are needed by the intermediate institution evaluating the treatment. For this, an interface is defined according to which certain information in accordance with the smart contract can be requested from electronic health record. In this context, in the diagram of figure 1, reference is made to an FHIR API such as the HAPI FHIR API; these abbreviations stand for Healthy Americans Private Insurance Plans - Fast Healthcare Interoperability Resources- education programs interface. In other words, first, a suitable interface is agreed upon according to the present invention. The average skilled person will understand that these program interfaces are commonly used for the exchange/communication of electronic medical data; reference is made to this standard in order to indicate that the present invention and certain of its aspects may rely on conventional techniques established for the exchange of data; however, it will be understood that despite such explicit reference, other interfaces might be implemented as well.

For example, it has been stated above that the data input by a physician or a nurse can be simplified by an app. Where data are needed that thus far had not been entered into the electronic health record, it might be possible to implement collection of this data as part of an interface-request by defining and instantiating an application that can be used by the nurse, a physician or the like as the app simplifying data input; it will also be understood that similar apps can be defined for the collection of patient responses. As an example, in specific disease areas such as cancer, it has been found that the data collected in a plurality of hospitals frequently is insufficient or inconsistent with the data collected in other hospitals. Here, modules for existing programs or independent programs could be provided and instantiated. Note that it is not necessary to fully automate the instantiation of such applications, but that it is also possible to improve potential interactions and the integration across different hospital systems and apps by providing suitable programs for installation to a system administrator rather than automatically installing the programs.

It will be understood that for communication with electronic records, in particular electronic health records, a plurality of different standards might be encountered. In particular, it will be understood that it will be possible to implement future interface standards with the present invention. In the diagram of figure 1, examples for specific queries such as disease codes found in the electronic health records, dates since last transmission of data, standardized codes of medicaments prescribed to and taken by the patient - in the example given, the SNOMED-code-, the country or other indication of the location such as the region of the city the patient is treated in, the gender, age or age range, as well as data referring to an agreed outcome coding (for example "complete recovery" or "reduction of blood pressure to normal value during the period of drug intake"), adherence conditions and/or a measure to which the patient has adhered to conditions agreed upon agreed (for example "patient will have to walk at least 1000 steps per day/patient has walked 897 steps per day on average since last transmission of data). The average skilled person will be aware that currently, in order to increase interoperability of systems and records used in medical services, standards such as the Unified Medical Language System (UMLS) have been defined. The UMLS integrates and distributes key terminology, classification and coding standards, and associated resources to promote creation of more effective and interoperable biomedical information systems and services, including electronic health records. The average skilled person will understand that such a standard may be used with the present invention in that use of such standardized language systems is advantageous in particular where data are to be retrieved from a plurality of locations, in particular a plurality of different hospitals in one country or different countries.

Also, a health service provider may request confirmation that a specific patient is eligible to participation in a certain treatment program, such as being eligible to receiving expensive cancer drugs or a new drug to reduce blood pressure. Such request may come up during the treatment of a patient already participating in other treatment programs; also, a case might arise where a patient is to be treated using drugs that have been not yet been marketed in the country of treatment before. Where eligibility is to be assessed, the program interface might automatically gather information whether (and if so, what) additional or alternative treatments are requested for a specific patient. It will be understood however that a general request can be sent to the server keeping the electronic health records of a plurality of patients to indicate whether agreements relating to new patients should be met. This is preferred over a procedure where specific requests have to be actively mailed to the service payer and/or to the intermediate institution; the reason why it is preferred is that the request can be treated in an automated manner without additional actions required by physicians or administrative staff other than entering the request into the internal electronic health record.

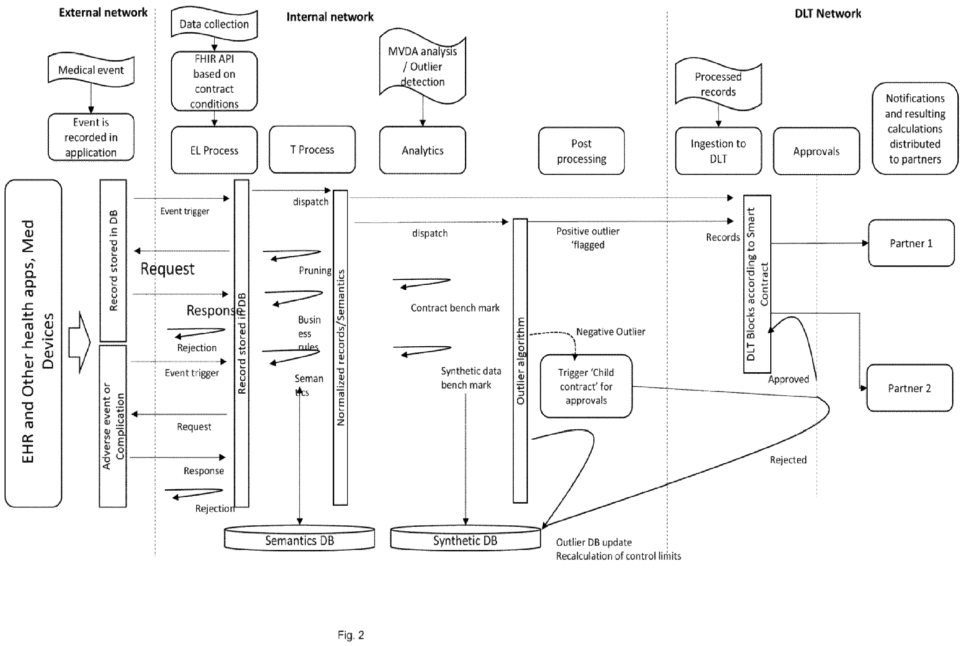

Once an interface has been defined, the respective information can be retrieved from the respective data storages of for example the smart phone of the patient or the electronic health record in a clinic or the practice of a physician and a success-based payment can be determined. This can be done following the flow diagram shown in figure 2.

According to figure 2, first, relevant data is obtained.

It will be understood that not only medical data will be retrieved, but also data necessary for the administration and management of payments, for example name of patient, name of hospital, care plan or plans agreed upon and so forth. The data communicated may also comprise other non-medical information, such as geographical information, general ambient temperatures during a period of treatment, or data that allows to judge whether or not the patient has adhered to conditions agreed upon in the contract such as walking a minimum number of steps per day or reducing the intake of calories.

It will be understood that several techniques exist for the connection to these devices, in particular a direct connection, for example via API/Web services based on either FHIR or custom built or other similar in nature. Where it is preferred to establish a more automated communication, which is particularly useful for assessing the outcomes of a large number of treatments from a large number of hospitals in a plurality of countries. For example, the outcome of different treatments, for example at least 5, preferably at least 10 different treatments, for a number of patients exceeding 50 patients, preferably exceeding 100 patients each, the patients coming from at least 5, preferably at least 10 different hospitals, in particular in at least 3, preferably at least 5 different countries. Here, a fully automated system using a messaging system for transferring data is preferred. The messaging could be based for example on XML, flat file or JSON format or others. Accordingly, once the automated process of transferring data has been established, there is no need to remind any person to retrieve the data nor is there any need to spend any working hours effecting transmission. It will be understood that where the automated transfer is established as is preferred, the data transmitted will follow a data retrieval protocol agreed upon in the smart contract that all data necessary to assess the outcome of a treatment as well as any additional contract and/or adherence conditions and/or, depending on requirements, certain other segments of the FHIR resources or others relevant for determining the payment.

Before determining the payment based on the data indicating whether or not the outcome agreed upon in the contract has been reached, the data itself is subjected to a determination whether or not the data is corrupted and/or whether other errors are present in the data. Errors could be corrupted due to a hardware failure and errors could occur for example due to mistakes by a physician, nurse or patient when entering the raw data. Also, a possibility might exist that data has been intentionally manipulated. It will be understood that a check for consistency might rely on each single data entry alone, for example evaluating whether it is reasonable to assume that an allegedly very significant weight loss has occurred in a very short time; also, a consistency check could be carried out using a plurality of data; for example, it is unlikely that a patient states in a patient response to feel very good while at the same time high fever is recorded. Where data cannot be directly accepted, it could either be rejected where it is obvious that a data entry has been erroneous or has been corrupted, or it can be flagged and a request or message can be sent to the source of data such as the electronic health record, patient or the like to verify or correct the data.

Thereafter, all extracted data that has been validated to not show any indication of error, manipulation, corruption and the like and should thus be trusted. It has been emphasized above that the communication between the parties involved such as hospitals, patients, insurance companies and in particular an intermediate assessing the outcome of the treatment must be effected in a manner establishing trust and maintaining confidentiality of patient data. Accordingly, it will be preferred to use block-chain technology using distributed ledgers and encrypting data in a manner where information included therein is made available on a need to know basis only. It will be understood that encrypting, decrypting and distributing the information once information has been added to be distributed ledger is requiring large amount of processing power, bandwidth and energy. Accordingly, where block-chain technology is used, the data will be assessed by first extracting the relevant data from the blockchain and the extracted data is collected in a repository termed "data lake" from which it can be easily retrieved without further decryption or the like. It will be understood that the data lake will be strongly protected against intrusion using firewalls and other techniques known per se.

It will also be understood by the person skilled in the art that the ingestion of data into the data lake will comprise steps such as normalization, for example using Celsius instead of Fahrenheit for all temperatures. In the embodiment shown, the outcome of a treatment is determined by feeding the data into a suitable artificial intelligence model.

According to the present invention, to determine value-based payments, a machine-learning model is used; the present invention also suggests identifying outliers and selecting certain outliers so that the model can be improved. In this context, it should be understood that in such cases, outliers are of particular interest where one or more parameters can be identified that have not been regarded to be important in an initial model but now a indicate a parameter pattern previously disregarded should be considered. Also, it will be understood that the parameters that are relevant for an initial model will only be known once the model has been trained. This implies that more data needs to be ingested into the data lake than later on necessary to assess the success of a treatment based on the initial model. Therefore, reference is made in figure 2 to "pruning". It will be understood that while the additional data significantly helps to select relevant outliers, the additional data need not be evaluated in the initial model.

In some of the cases, cases patients might not have adhered to conditions agreed upon in the contract. This might be the case because of the patient has not bothered to stick to a medication regime or has not bothered to keep a strict diet; in such a case there could be provisions in the insurance contract of the patient allowing the insurance company to decline payments and therefore, no payments would have to be made to the hospital by the insurance company (although, obviously, payments would then have to be made by the patient in the case mentioned).

However, in a number of cases, a possibility also exists that the patient did not adhere to the conditions agreed upon for reasons that justify deviations from a pattern initially agreed upon. Corresponding provisions relating to reasons of nonadherence are accordingly included in the standard agreement. For example, such provisions will take into account that severe side effects may be observed and that here, although the treatment should be interrupted or terminated, some form of payment to the medical care provider such as the hospital still is justified. Accordingly, before excluding payments due to non-adherence to conditions agreed upon in the contract, an assessment can be made whether the nonadherence is justified or not. In a preferred embodiment, treatment of a patient will not be reimbursed unless there has been a recorded adverse event or complication that indicated that clinically a dose reduction or a change of frequency (interruption or discontinuation) has been prescribed by a physician such as an oncologist.

The data is then analyzed using the initial machine-learning model and payments to be effective according to a contract agreed upon between the healthcare providers and the healthcare payers are determined. This is done in a conventional manner. However, in doing so in a number of cases, no payment or only very little payment is to be effected for a variety of reasons for example because severe side effects have occurred in the range of patients or because the number of patients did not react to the treatment as predicted and expected, although some improvement was still observed.

The invention now suggests to analyze whether in the data there is any systematic pattern to be found that is not reflected in the machine-learning model; accordingly, in particular the data of those patients that have been treated without full success, in particular in a manner where no payment must be made according to the contract initially agreed upon, should be analyzed. The respective data points can be treated as outliers. However, outliers are not restricted to patients that have been treated without success. For example, where a drug is administered to patients to reduce virus load, for example the HIV-load found in AIDS patients, payments could be effected if the HIV load is below a certain non--zero threshold. Among those patients having a significantly reduced HIV load, there might be some patients where the load found is exactly zero (that is, below the detection limits). On the one hand, since these patients should be identified because identifying the reason why the treatment is so particularly successful might help other patients; on the other hand, if there is a specific reason why those patients are treated more effectively, there is also a good reason to change the model in the future such that treatment of those patients must result in a complete reduction of the HIV load. Therefore, reasons might exist to include outliers relating not only of those patients that have been treated without the success expected.

Once a sufficient number of outliers have been identified, those that exhibit a sufficiently interesting behavior warranting further analysis should be selected; this is assumed where a common behavior can be ascribed to a plurality of such outliers. In order to determine such common behavior, a multivariate analysis can be executed, using in particular one of Chauvenet's criterion, a method according to ASTM E178 Standard Practice for Dealing with outlying Observations, Mahalanobis distance and leverage, Peirce's criterion, Tukey's fences, a distance based anomaly detection, a density based anomaly detection and a local outlier Factor. In this manner, those outliers that exhibit a common behavior can be identified. In view of this, and figure 2, References had to multivariate data analytics, MVDA.

Now, as indicated above, a number of possibilities exist how to use and/or handle these outliers. First of all, those outliers that relate to treatments that have not been as successful as expected, in particular outliers that relate to treatments that have missed success only by a small margin, warrant further analysis to determine whether amendments or additions to the initial smart contract and the agreements made therein are justified. For example, a case might occur where treatments are evaluated in view of data gathered in other countries and several local factors contribute to the success or failure of a treatment such as average ambient temperatures, different general eating habits and the like. Here, different patterns will exist for the different countries and the present invention allows adjusting contracts to different patterns identified much faster than before. The actual manner how to deal with such patterns emerging from the analysis of outliers can depend on the exact agreement met. In a preferred automated embodiment, a "new knowledge" - provision can be included in the initial contract pre-defining how parties to the contract shall deal with groups of outliers relating to a newly formed common reason for over-performing or slightly underperforming. If such a provision is included in the initial contract, no amendment to the contract itself is needed at all, although in most cases a notification should be sent to all partners involved. In other cases, where partners prefer to leave a contract as is once it has been agreed upon, a suggestion can be made, in particular be made automatically, to meet a child contract reflecting the slightly different response of patients of the outlier group to a treatment and accordingly defining success and/or conditions, in particular adherence conditions, in a manner different from the provisions in the original (parent) contract.

It will be understood that in particular where treatments and/or pharmaceuticals needed for the treatment are extremely expensive, both parties might prefer to consciously agree to such (child) contracts rather than including "new knowledge" - provisions in the original (parent) contract. It will be understood that where for example a higher dosage of very expensive pharmaceuticals is needed, side effects are severe and/or the (felt) improvement to the patient is not considered sufficient, either party may reject the suggestion of meeting a new contract.

Depending on how the parties intend to react to the selected outliers, the previously used training set could for example be enlarged by adding the selected outliers, by replacing a fixed number of previously included set elements by selected outliers or by adding the outliers to a base set from which a training set is (randomly) chosen for training a new model. Also depending on how the parties have agreed to react on the selected outliers, either the initial assessment of treatment success is maintained and/or data are additionally assessed according to a child contract and/or, where both a common pattern has been found in a sufficiently large plurality of outliers such that a retraining of a machine learning model is justified and the initial agreement contains provisions to automatically amend the conditions for payment, a new assessment can be effected and corrected success -based payments can be calculated.

Once this has been done, the calculated results need to be communicated to the parties involved. In other words, the healthcare provider and the healthcare insurance company usually are informed; in selected cases, the patient could also be informed.

When communicating the results to the involved parties, privacy issues have to be considered again and accordingly, the relevant payment information is added as an encrypted block to the block chain and distributed.

At the same time, a decision must be made what to do with the data ingested into the data lake. Where allowed by the parties involved and in view of legal regulations, the data can be maintained as is or can be anonymized so that at a later stage, the information contained the overall set of data collected can be made available for research.

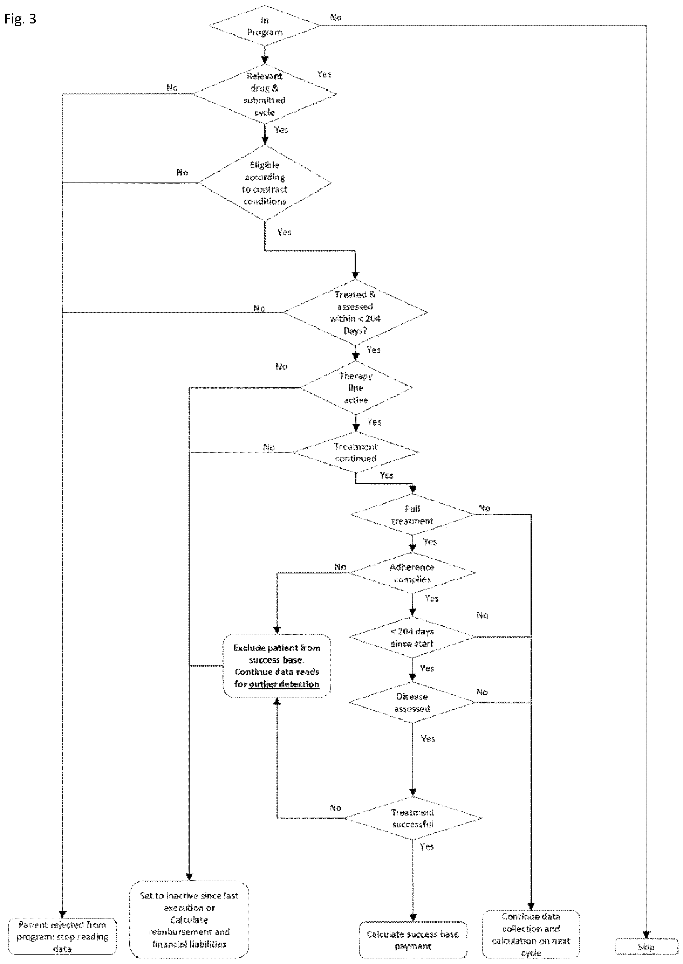

As can be seen above, a method of assessing the success of a medical treatment and/or of determining a value-based payment will follow a sequence of steps and decisions predefined by the contract. This will be further exemplified with respect to the flow diagram of figure 3. According to figure 3, the decisions and checks can be made as follows.

When retrieving information from an electronic health record of the hospital, a first check is made for every patient whether or not the patient is part of the program that is whether the medical data of the patient need to be evaluated. It will be understood that a large number of patients in a hospital will not receive any relevant treatment and thus health records should be skipped. For example, the patient may suffer from an entirely different disease.

In case the patient is participating in the program, a check is made whether the patient is eligible for a success-based payment according to the smart contract agreed upon. The patient must satisfy certain conditions, for example with respect to his age, health insurance, disease-for example where cancer is concerned the stage of the cancer, the histology, presence or absence of mental status in certain organs and the like. It can all be also be judged whether the patient suffers from the specific form of cancer for a very long time already or whether he has been newly diagnosed. Patients that have already suffered from a specific disease such as cancer for very long time may be significantly more difficult to treat; in particular, where a risk exists that metastasis occurs. Accordingly, the judgment is made to exclude patients that have suffered from the specific disease for too long. In the present example, it is assumed that the patient is eligible to the program since he has been diagnosed only recently. Accordingly, then, the patient may be treated in a manner reimbursing a pharmaceutical company for delivering a personalized drug only in case of success and a corresponding treatment plan defining exact delivery of pharmaceuticals both with respect to timing and dosage is established. In contrast, problems might have shown early on, so that an initial treatment plan has been abandoned completely and a new line of treatment has been started; accordingly, the initial treatment line would not be "open" any longer.

If it is determined, that the patient is not eligible, the patient will be rejected from the program and no further data concerning this patient will be acquired for the time being. Note that it is possible for a physician to re-enter a patient into the program and that then, the next time the electronic health records of the hospital are accessed, a new evaluation could be detected. For example, obese patients could be considered to be not eligible, and a patient who initially during a first evaluation had the body mass index beyond the threshold accepted by the smart contract has lost significant weight ever since; in that case, the patient could be reintroduced to the contract and the data be read anew. Also, note that where data are incomplete, for example because the results of a laboratory histology examination have not yet been entered, a decision as to eligibility could be postponed until all data needed are available. The skilled person will understand that once a check as to eligibility has been passed, a flag can be set so that the eligibility needs to be checked only once.

Eligibility relies on a number of tests and conditions. In order to avoid that once the patient is considered eligible, the treatment is only started over after a very prolonged time-resulting in a worsening of condition and the beginning of treatment, a check is then made that the assessment is not too old. Where the assessment for eligibility is too old without any planned treatment, the patient is rejected from the program (could be reentered once the tests have been updated).

The next check is made is whether or not the therapy that is to be paid in a success-based manner according to the contract is going on or not, that is whether or not the therapy line is active. In case the therapy line is not active, obviously, the patient is not treated any longer; in such a case, there cannot be a success based payment as not all conditions agreed upon in the smart contract has been adhered to. Otherwise, that is when the therapy line is active, a check is made whether the full treatment has already been given or not. In the example shown in the figure, it is assumed that the number of treatments need to be effected; unless or these treatments have been affected, no payment is made in the example and thus, where it is decided that the full treatment has not yet been finished, data collection is continued and the calculation of payments is postponed until the treatment has been completed.

In particular, data will be collected indicating whether all medicaments have been administered as planned. Furthermore, data relating to complications that might have occurred are collected together with data indicating whether in view of complications a reduction of the doses of medicaments or complete discontinuation of treatment has been prescribed by a physician treating the patient. In a typical example, a plurality of different drugs are administered and the dates of administration together with the dosages of each of the pharmaceuticals administered are recorded in the electronic health record. Then, further data is collected that allows the assessment of the treatment, for example relating to the well-being of the patient, the detection of further metastasis, a reduction of size of existing tumors and so forth.

It will be understood that the data collected in the electronic health record is stored in a server of the hospital where the patient is treated. On the server, a program is periodically running to automatically generate blockchain blocks including the information gathered for those patients that at the time of generation of blocks are part of a success-based treatment plan. The blockchain to which the blocks have been added is then distributed to all parties involved, in particular an intermediate assessing the success of treatments. This intermediate party will then determine at some point whether all medicaments have been administered and treatment has been given as planned and, if this will not the case, not whether any complications have occurred that justify a deviation from the preagreed treatment plan. If so, it is checked whether a dose reduction or discontinuation of certain pharmaceuticals has been prescribed by the oncologist responsible for treating the patient. Where this is the case, a check is made whether certain of the medicaments have been recently administered (with "recently" being defined in the contract to be for example 105 or 42 days depending on the specific pharmaceutical). Where this is not the case, the corresponding data of the patient is excluded from the payment program; however, for those treatments that have been effected prior to the occurrence of complications, a reimbursement is calculated.

In case the treatment has been completed, the check is made whether all conditions agreed upon have been complied to. For example, a check can be made whether or not the drugs that have been given in the prescribed intervals, with the correct doses and so forth. It will be understood that in a case where a physician has decided to change the dose of one of the drugs the corresponding entry the electronic health record is found, adherence is given if the doses administered correspond to the changed doses. Thus, where a deviation from the treatment plan has been recorded but no complications have occurred, the patient is excluded from the assessment of his success and the parties are informed that payments must be determined differently. Also, a check is made whether other conditions agreed upon have been adhered to, or whether reasons exists why no adherence was given; for example, where patient is expected to walk a given distance each day, but has broken a leg during treatment so that he could not walk, adherence might still be considered to be given.

Otherwise, that is if the administration of medicaments has followed the predetermined time scheme, a further check is made with respect to the dosages; if the dosages correspond to those preagreed, a check is made whether the duration of treatment already is long enough to warrant an assessment of the success ; these checks will be done by the intermediate party.

While it is not shown in figure 3, it will be understood from the above disclosure that for such assessments, the data included in the block of the blockchain would be checked for consistency and will be included.

Where no adherence is given, it is possible that the information obtained from the patent is relevant in order to detect outliers; accordingly, the patient is kept in the program so that additional data could be retrieved later. Nonetheless, a non-success based reimbursement should be calculated for such patients.

In contrast, where the patient has complied with all conditions, a check is made whether or not sufficient time has passed since the last treatment. In many cases, for example where a patient has been treated against certain forms of cancer, the treatment will be considered successful only if no matter status have been observed a sufficiently long time after treatment has ended. Therefore, the check is made whether or not sufficient time has passed. In the figure, the time of 204 days is considered the minimum time since the end of treatment.

If the minimum time since the end of the treatment has not lapsed yet, no decision can be made as to success-based payments and thus, the decision has to be postponed. I Otherwise, an assessment of the disease can be made. Accordingly, where a sufficiently long time has lapsed, it is checked whether all medical examinations necessary for evaluating whether or not the treatment has been successful have been carried out. Where this is not the case yet, again, a decision regarding success-based payments need to be postponed until the next cycle of data collection. It will be understood that in certain cases, it will be necessary to do some final examinations of the patient and if these have not yet been done, a notification can be sent to the hospital so that the examinations can be scheduled.

However, in case the disease has been assessed, a decision can be made whether or not the treatment has been successful. In other words, once all examination results necessary for the assessment of success are present, the intermediate party can determine in view of the data whether or not the state of the patient shows that the disease has progressed, for example if metastatic tumors have been observed, existing tumors have grown and so forth. Where this is the case despite the treatment going on for a sufficiently long time (that is e.g. "progression is observed more than 205 days since the day of first administration of medicaments"), the patient obviously does not respond in the expected manner to the treatment and will be excluded from the program in the future. Also, the payment for treatments effected thus far needs to be determined; such payment could for example reimburse the hospital for treating the patient, examining samples in laboratories etc.. However, payments to the pharmaceutical company producing the drugs could be denied.

Where the treatment has been successful, That is no additional metastatic tumors have been observed, pre-existing tumors did not grow and so forth, A success-based payment is calculated.

In contrast, where the treatment is judged to not have been successful, that is where the outcome preagreed upon has not been reached, the decision is made what other liabilities exist and any reimbursements necessary that are not success-based are calculated. For example, a payment is made to the hospital but not to the manufacturer of drugs. However, as the patient has been given a full treatment, and as the treatment has not been successful despite the patient adhering to all conditions, it is not entirely unlikely that new knowledge can be acquired by analyzing data from these patients. Accordingly, the patients are kept in the program so that additional data can be acquired during subsequent data accessing cycles (as agreed upon in the contract) and the decision later on is made whether or not these patients are to be treated as relevant outliers.

It will be understood that the calculation of payments is done as described above, that is by applying a machine-learning model and that in the process of assessing the outcome of the treatment, and outliers are determined and selected for future handling. From the flow diagram, it will also be obvious that outliers may be selected from data where complications have occurred and dosage had to be adapted and/or in cases for which during the calculations it is determined that the success of treatment does not justify full payments or does not even justify partial payments. As there is a likelihood that some patients might together form a relevant group of outliers, under some circumstances data continues to be collected. Note that it can be pre-agreed in a smart contract that such data collection continues.

According to the present invention, as has been indicated above, success-based payments can be reliably determined in a secure manner. Furthermore, the determination of what a fair success based payment not only is simple; also, it will be understood from the above disclosure, that the process of such determination is transparent and reliable, so that parties to the contract can be expected to agree on the conditions of a contract faster. This holds in particular as the disclosed identification and use of outliers helps to improve the conditions of a contract in view of knowledge gained since the instantiation of a contract.

Regarding pricing, in the example above, reference has been made to the administration of drugs and the payment for these drugs. However, it will be understood by the person skilled in the art that the present application is not restricted to such cases. For example, it is possible to also determine success-based payments for treatments involving surgery procedures, irradiation procedures and/or the application of medical devices such as for example pacemakers, artificial limbs and the like.

It should be understood that the present invention not only allows improvements with respect to success-based smart contracts relating to a large groups of patients; rather, it is also possible to use the technique of the present invention and in particular the fact that knowledge about success to be expected can be used very fast after acquisition. This allows to not only determine conditions of a success based smart contract for large groups of patients, but will also help in a flexible dynamic pricing for specific, small groups such as a rather small number of patients having a number of well-defined comorbidities. The way outliers are handled according to the present invention allows to very easily to determine fair conditions for success based payments even though in a more conventional set up, such patients with comorbidities would most likely to present a high-risk of treatment failure and/or be considered to be hardly treatable successful. This might lead to the complete exclusion of such high-risk patient from expensive and thus success-based payments and it might result in more patients being excluded than justifiable based on existing data, simply because the payer side is more risk averse in lack of proper information. In contrast, due to the present invention, it is easier to tailor conditions to small groups previously identified to be outliers for which a systematic pattern can be found.

As an example, it would be possible to define health improvements for small patient group having specific comorbidities in a manner such that success is conceded even though for other groups not having the specific comorbidity, the same improvement of health conditions would be considered a failure. Also, the condition to which each patient of the small group has to adhere may be set differently and/or the amount of money to be paid in case of success can be set differently for specific small groups of patients. It will be understood it basically allows micro-pricing, up to the point where the small group of patients comprises but one single patient. It will also be understood that the invention also allows to factor in a larger number of parameters, resulting for example in a flexible or dynamic pricing using for example an algorithm embedded in a "smart" contract initially agreed upon depending on parameters such as the gender of the patient, the ethnicity of a patient, the age of the patient, measures of physical activities of a patient, comorbidities of the patient, treatment methods of comorbidities.

Also, it might be possible to better define relevant control parameters and to also factor in into the pricing the overall number of patients in treatment, the overall number of patients treated by a specific doctor, hospital or the like, overall worldwide outcome and/or pricing agreed for other areas and even parameters such as a season during the year, average ambient temperatures and so forth. It will be understood from the above, that this might also be helpful in tailoring individual insurance rates, so, based on data collected, certain prices could be offered and it would be even possible to procure protection against fluctuation by engaging third party insurance companies that will offer engagement agreements based on the individual risk of every pricing event.

Nonetheless, although one achievement of the present invention is that agreements are simplified and/or will be more fair to all parties involved, it should be kept in mind that while such advantages may be obtained, the implementation of the invention requires significant technical efforts as not only is the execution of automated computerized steps considered absolutely inevitable in the context of the present invention, but also the technical hardware system is complex, in particular because very large amounts of data need to be communicated between a large number of parties and be handled in a failure and tamperproof manner.

It has been described above, outliers are used according to the invention in a specific manner, namely to improve the machine learning models in a specific manner. While this has been explained with respect to processing smart contract data, improving the machine learning models based on outliers identified vis-à-vis an initial model is helpful in other fields as well. For example, reference could be had to the auto mobile industry, where an initial model could be based on the average behavior of a given car type having aggregates controlled in view of a plurality of parameters according to a machine learning model. However, the sensor response and/or the aggregate response in a specific automobile of the car type might deviate from the average behavior, leading to clusters of relevant outliers. Here, the outlier treatment of the present invention might lead to improved behavior of the car type. It will be understood that similar advantages might be obtained in another technical fields.

## Claims

1. An automated data processing method comprising the computerized steps of training a machine-learning model based on a first training set of data, evaluating new data with the trained model and identifying outliers,
adding selected outliers to a training set
and
training the machine learning model with a second training set comprising the selected outliers.

2. The automated data processing method according to claim 1, wherein
the first training set of data is obtained from a first source of data,
the new data evaluated for identifying outliers comes from a second source of data, and
the second training set comprises both data from the first set and the selected outliers, such that the automated data processing method comprising the computerized steps of training a machine learning model based on a first training set of data obtained from a first source of data,
evaluating data from a second source of data with the trained model and identifying outliers,
adding selected outliers to a second training set
and training the machine-learning model with a second training set comprising the selected outliers.

3. The automated data processing method according to claim 1 or 2, wherein outliers are identified by at least one of a multivariate analysis, Chauvenet's criterion, a method according to ASTM E178 Standard Practice for Dealing with outlying Observations, Mahalanobis distance and leverage, Peirce's criterion, Tukey's fences, a distance based anomaly detection, a density based anomaly detection and a local outlier Factor.

4. The automated data processing method according to claim 1 or 2, wherein the identified outliers are classified to either relate to at least one of a data entry error, a measurement instrument error, an intentional error, a data processing error, a sampling error or, alternatively relate to novelties.

5. The automated data processing method according to any of the previous claims, wherein outliers relating to novelties are collected and a selection for inclusion into the second data is made from this collection.

6. The automated data processing method according to the previous claim, wherein for selection, a pattern in the collected outliers is sought for and those collected outliers that best conform to the pattern identified are added to the training set.

7. An automated data processing method according to any of the previous claims,
wherein data relating to a contract are processed and
the contract has at least one condition agreed upon that can be fully or partially fulfilled,
and the degree of contract fulfilment is automatically determined in view of the data processed relating to the degree of contract fulfilment.

8. An automated data processing method in particular according to any of the previous claims,
wherein data related to a contract are processed and
the contract has at least one condition agreed upon that can be fully or partially fulfilled,
and the degree of contract fulfilment can be automatically determined in view of the data processed relating to the degree of contract fulfilment,
wherein the method comprises the computerized steps of
ingesting data from a plurality of sources,
automatically determining an extent to which the contract has been fulfilled
in view of the ingested data
and
in view of the at least one condition agreed upon in the contract,
wherein
an extent,
to which the contract has been fulfilled,
is automatically determined by computerized steps
in response to a machine learning model trained based on a first training set of data,
and outliers
are identified by a statistical analysis,
and
are evaluated using computerized steps ,
the automated method further comprising execution of
at least one of the steps of
amending the machine learning model by training the model with a second data set comprising the outliers,
amending the extent of contract fulfillment determined, suggesting an amendment to the contract,
automatically amending the contract
in view of outliers selected according to the evaluation.

9. The automated contract data processing method according to claim 7 or 8,
wherein
the contract is a smart contract,
the smart contract has at least one condition agreed upon that can be fully or partially fulfilled,
data are available relating to the degree of contract fulfilment, and
the degree of contract fulfilment can be automatically processed,
the method comprising the computerized steps of
ingesting data automatically obtained from a plurality of sources in accordance with the smart contract,
automatically determining an extent to which the contract has been fulfilled
in view of the ingested data
and
in view of the at least one condition agreed upon in the contract,
and wherein
an extent, to which the contract has been fulfilled is automatically determined
by computerized steps in response to a machine learning model trained based on a first training set of data,
and outliers
are identified by a statistical analysis,
and
are evaluated using computerized steps ,
the automated method further comprising execution of
at least one of the steps of
amending the machine learning model by training the model with a second data set comprising the outliers,
amending the extent of contract fulfillment determined,
suggesting an amendment to the contract,
automatically amending the contract.
in view of outliers selected according to the evaluation.

10. An automated health care contract data processing method according to claims 7 or 8, wherein
the contract is a smart contract relating to treatments by health care providers and health care payers,
the smart contract has at least one condition agreed upon between a health care provider and a health care payer that can be fully or partially fulfilled,
data are available relating to the degree of contract fulfilment,
and
the degree of contract fulfilment can be automatically processed,
the method comprising the computerized steps of
ingesting data automatically obtained from a plurality of health care providers in accordance with the smart contract,
automatically determining an extent to which the contract has been fulfilled
in view of the ingested data
and
in view of the at least one condition agreed upon in the contract,
wherein
an extent, to which the contract has been fulfilled is automatically determined
by computerized steps in response to a machine learning model trained based on a first training set of data obtained from a first health care provider or a first group of health care providers, and outliers
are identified by a statistical analysis,
and
are evaluated using computerized steps,
the outliers being obtained from one or more second health care providers different from the first health care providers,
the automated method further comprising execution of
at least one of the steps of
amending the machine learning model by training the model with a second data set comprising the outliers,
amending the extent of contract fulfillment by one of the health determined,
suggesting an amendment to the contract,
automatically amending the contract.
in view of outliers selected according to the evaluation.

11. An automated health care contract data processing method according to the previous claim,
wherein
the contract is a blockchain based smart contract relating to treatments by health care providers and health care payers,
the data is automatically obtained from a plurality of health care providers in accordance with the smart contract is subject to confidentiality regulations
and
ingesting data is done by an intermediate party different from both the health care providers and the payers.

12. An automated data processing method according to the previous claim,
wherein
data based on the ingested data is stored by the intermediate party outside the block chain.

13. An automated data processing method according to the previous claim,
wherein the data ingested by the intermediate party is extracted, loaded and stored outside the block chain in an untransformed manner.

14. An automated health care contract data processing method according to the previous claims,
wherein
at least one health care provider collects data from individual patients or from a plurality of connected partners and
the data ingested by the intermediate party is the data collected by the least one health care provider.

15. An automated health care contract data processing method according to the previous claims,
wherein
at least one health care provider collects data from individual patients or from a plurality of connected partners and
the data ingested by the intermediate party is the data collected by the least one health care provider
and
the data obtained and is transferred in response to a number of requests smaller than the number of individuals the data relates to.
